# FASCICULE DE BREVET EUROPEEN

(11) **EP 4 096 905 B1**
(45) Date de publication et mention de la délivrance du brevet: **04.09.2024**
(21) Numéro de dépôt: 21706361.9
(22) Date de dépôt: 29.01.2021
(51) Int. Cl.: B29C 70/44, B29C 35/02, H05B 3/00, B29L 31/30, H05B 3/34

(54) **TAPIS CHAUFFANT SOUPLE POUR LE PREFORMAGE OU LA CONSOLIDATION DE PIECES COMPOSITES**
FLEXIBLE HEIZMATTE ZUM VORFORMEN ODER VERFESTIGEN VON VERBUNDTEILEN
FLEXIBLE HEATING MAT FOR PREFORMING OR CONSOLIDATING COMPOSITE PARTS

(30) Priorité: 31.01.2020 FR 2000987
(43) Date de publication de la demande: 07.12.2022
(73) Titulaire: ECOLE NATIONALE SUPERIEURE D'ARTS ET METIERS, 75013 Paris (FR)
(72) Inventeur: LEGRAND, Marc, 59230 Saint Amand les Eaux (FR); DUTHOIT, Olivier, 59155 Fâches-Thumesnil (FR); GAUTHEROT, Martin, 10110 Buxières sur Arce (FR); PALUCH, Bernard, 62290 Noeux les Mines (FR)
(74) Mandataire: RVDB
(86) Numéro de dépôt international: PCT/FR2021/050173
(87) Numéro de publication internationale: WO 2021/152273

(56) Documents cités:
- EP-A1- 1 962 562
- WO-A1-2016/139359
- WO-A2-2019/075173
- FR-A1- 3 055 571
- FR-B1- 2 956 555
- US-A1- 2018 319 046
- US-B2- 10 213 969

## Description

### Domaine technique

La présente invention concerne la fabrication de pièces composites, en particulier celles présentant des surfaces importantes, et porte tout particulièrement sur un dispositif multicouche chauffant souple du type tapis chauffant utilisé dans le domaine des moules à chauffage endogène pour la réalisation de préformage ou de consolidation de préformes fibreuses de pièces composites, par exemple des pièces aéronautiques.

L'invention concerne également une installation pour la réalisation de préformage ou de consolidation de préformes fibreuses de pièces composites utilisant un tel tapis chauffant.

### Etat de la technique

Les pièces composites à matrices organiques sont obtenues en réalisant un certain nombre d'étapes au moyen d'un moule, dont une étape de mise en pression et de chauffage servant à transformer la résine. Le chauffage du moule peut être, selon la technique retenue, soit exogène soit endogène.

Le chauffage exogène est obtenu dans un autoclave ou une étuve, la chaleur étant transmise par convection au moule. Cette technique est fortement consommatrice d'énergie compte tenu du faible rendement thermique de ces installations et de leur inertie importante. De plus cette technique n'est pas adaptée à la production de pièces de grandes dimensions et en grande série. En effet, la taille de l'autoclave limite les dimensions des pièces composites fabriquées. En outre, le temps de refroidissement important nécessaire limite la cadence de production des pièces composites.

Le chauffage endogène consiste à intégrer des éléments chauffants au moule qui, selon une première variante, sont des tubes chauffants permettant le passage d'un fluide caloporteur qui apporte des calories à la matrice. Selon une seconde variante, des moules métalliques sont équipés de dispositifs de chauffage par induction ; cette technique est très onéreuse, gourmande en énergie et peu adaptée à des grandes surfaces de chauffe. Selon une troisième variante, des moules métalliques sont équipés de cartouches résistives chauffantes ; cette technique est également gourmande en énergie et peu adaptée aux grandes surfaces de chauffe. Ces trois variantes précitées sont relativement peu exploitables du fait des contraintes d'installation, notamment lorsqu'il s'agit de réaliser des pièces composites de grandes dimensions, et du fait de l'énergie importante consommée.

Une quatrième variante consiste à utiliser un moule en matériaux composites équipé d'un système chauffant résistif, tel que décrit dans le brevet FR2956555B1. Cette quatrième variante reste avantageuse car la consommation d'énergie est beaucoup plus faible que les précédentes variantes. Un inconvénient toutefois de cette technique réside dans le fait que le cordon composé d'un fil résistif disposé dans une gaine isolante nécessite d'être noyé dans un moule qui est également en matériaux composites, ce qui limite la température maximale à la tenue de la résine employée dans le moule. Si l'on souhaite dépasser une température de 200°C, il est difficile de conserver cette technique sauf d'utiliser des résines très coûteuses et difficiles à transformer (cyanate-ester, poly imide ou BMI 350°C) permettant d'atteindre des températures de 350°C ; si l'on souhaite dépasser une température de 350°C, cela devient tout simplement impossible.

Une cinquième variante consiste à utiliser un tapis chauffant souple appliqué sur une matrice constituant le négatif de la pièce composite à fabriquer. On citera la demande internationale de brevet WO2019075173A2 et la demande de brevet européen EP3431276A1. Ces mises oeuvre sont prévues pour travailler à des températures inférieures à 100°C pour WO2019075173A2 et inférieures à 200°C pour EP3431276A1. En outre, un inconvénient peut subsister avec ces mises en oeuvre, quant à l'obtention d'une température homogène sur toute la surface de la pièce composite à fabriquer.

Il est connu le brevet européen EP2643151B1 qui concerne la réparation de pièces composites ou de parties de pièces composites en utilisant un tapis chauffant principal et des tapis chauffants satellites disposés de manière attenante à la périphérie du tapis chauffant principal. Cela permet de compenser les déperditions thermiques à la périphérie du tapis chauffant principal et, ainsi, d'obtenir une stabilisation rapide des températures dans toute la zone de la structure recouverte par le tapis chauffant principal. Cette mise en oeuvre est difficilement envisageable pour la fabrication de pièce composite tout entière, en particulier lorsqu'il s'agit de pièces composites de grandes dimensions et lorsque les cadences de production sont soutenues et nécessitent une mise en place automatisée des éléments.

Il est également connu la demande de brevet européen EP1962562A1 qui concerne la réparation d'une pièce composite de type nacelle moteur et décrit un dispositif multicouche chauffant, de type tapis chauffant, qui présente une forme définie et appropriée à celle de la nacelle moteur pour couvrir une partie de cette nacelle moteur. Le dispositif multicouche chauffant comprend une surface de traitement thermique adaptée à la surface de la nacelle moteur, cette surface de traitement thermique étant constituée de plusieurs zones chauffantes qui comprennent chacune des éléments chauffants raccordés à un réseau de fil. Ces zones chauffantes peuvent être gérées indépendamment les unes des autres ou simultanément par un contrôleur pour réparer localement un défaut sur la nacelle moteur ou un ou des défauts couvrant plusieurs zones ou la totalité des zones recouvrant la nacelle moteur.

### Résumé de l'invention

La présente invention concerne un dispositif multicouche chauffant souple, de type tapis chauffant souple, pour la réalisation de préformage ou de consolidation de préformes fibreuses de pièces composites, notamment des pièces composites de grandes dimensions.

Une opération de préformage est une opération préalable à une opération de consolidation d'une pièce de structure composite. Une préforme peut être réalisée par empilement de nappes de fibres unidirectionnelle ou de toutes autres nappes textiles, comme par exemple des tissus, des nappes multiaxiales ou des mats, préférentiellement en fibres de carbone, de verre ou d'aramide, ces nappes étant enduites de résine thermoplastique sur un maître modèle. Cette opération préliminaire est généralement réalisée par un robot « de drapage ». Le résultat est dit « pré-consolidé », c'est-à-dire qu'il a une tenue mécanique faible et encore beaucoup d'air entre les différentes nappes, la liaison entre nappes étant réalisée par fusion de la résine.

Dans une opération de consolidation, la préforme préalablement obtenue est mise sur une matrice constituant le négatif de la pièce composite à fabriquer et le tapis chauffant est déposé sur la préforme avec une protection entre les deux, le tout est ensuite recouvert d'une membrane de mise sous vide, avec éventuellement la mise en place préalable d'une couche d'isolant entre le tapis chauffant et la membrane. L'opération de consolidation consiste à chauffer sous un vide le plus parfait possible la préforme à une température pouvant avoisiner 400°C. Le rôle de la consolidation est de garantir une cohésion maximale des différentes nappes par fusion de la résine thermoplastique tout en évacuant l'air résiduel contenu entre les nappes. Le résultat final est donc une structure parfaitement soudée et exempte de porosité.

L'invention a pour objectif principal de concevoir un tapis chauffant souple qui assure une répartition homogène de la température en tout point de la surface de la pièce composite, lors de la réalisation d'une opération de préformage ou de consolidation de préformes fibreuses des pièces composites à fabriquer. Cela a pour but de garantir un chauffage homogène sur toute la surface de la pièce composite.

A cet effet, le dispositif selon l'invention comprend au moins une première couche de support, au moins un premier cordon chauffant agencé, par exemple en serpentin ou en spirale, sur l'au moins une première couche de support et définissant une surface de traitement thermique adaptée à la surface de la pièce composite à préformer ou à consolider et un premier réseau de fils raccordé électriquement à l'au moins un premier cordon chauffant. En outre, le dispositif comprend au moins un second cordon chauffant agencé, par exemple en serpentin ou en spirale, sur l'au moins une première couche de support et définissant au moins une ceinture de blocage thermique à l'au moins une périphérie de la surface de traitement thermique et un second réseau de fils raccordé électriquement à l'au moins un second cordon chauffant. Ainsi, l'au moins une ceinture de blocage thermique évite les déperditions thermiques à l'au moins une périphérie de la surface de traitement thermique, ce qui permet d'obtenir une stabilisation rapide des températures sur toute la surface de la pièce composite à préformer ou à consolider et recouverte par ladite surface de traitement thermique. On comprend qu'une ceinture de blocage thermique entoure un bord périphérique de la surface de traitement thermique.

Lorsque la surface de la pièce composite est pleine, c'est-à-dire sans évidement, la surface de traitement thermique est également pleine et ne comporte qu'une périphérie externe, dans quel cas une seule ceinture de blocage thermique est prévue. Si, au contraire la surface de la pièce composite comprend un ou plusieurs évidements, la surface de traitement thermique peut également comporter autant d'évidements voire rester pleine. Si cette surface de traitement thermique comporte de tels évidements, alors une ceinture de blocage thermique sera prévue à la périphérie externe de la surface de traitement thermique et des ceintures de blocage thermique seront prévues aux périphéries internes définies par lesdits évidements sur la surface de traitement thermique.

Selon une réalisation du dispositif objet de l'invention, au moins deux premiers cordons chauffants sont agencés, par exemple en serpentin ou en spirale, de manière attenante les uns aux autres sur l'au moins une première couche de support de sorte à définir la surface de traitement thermique et au moins deux seconds cordons chauffants sont agencés, par exemple en serpentin ou en spirale, de manière attenante les uns aux autres sur l'au moins une première couche de support de sorte à définir l'au moins une ceinture de blocage thermique autour de ladite surface de traitement thermique. Cela permet d'adapter les puissances de chauffe de la surface de traitement thermique pour obtenir une température homogène quelles que soient les variations d'épaisseurs de la pièce composite à préformer ou à consolider et, de même, d'adapter les puissances de chauffe sur la ceinture de blocage pour assurer une homogénéité de températures à la périphérie de ladite surface de traitement thermique.

De préférence, selon cette réalisation précitée, pour chaque premier cordon chauffant présent sur l'au moins une première couche de support, un ou deux seconds cordons chauffants sont disposés en correspondance avec ledit premier cordon chauffant.

Selon cette réalisation précitée du dispositif objet de l'invention, les au moins deux premiers cordons chauffants sont raccordés entre eux en série et/ou en parallèle grâce à des premiers fils électriques de liaison et les au moins deux seconds cordons chauffants sont raccordés entre eux en série et/ou en parallèle grâce à des seconds fils électriques de liaison. En d'autres termes, sur chaque première couche de support, certains premiers cordons chauffants peuvent être raccordés en série et d'autres en parallèles, un premier groupe de premiers cordons chauffants raccordés en série peut être raccordé en parallèle avec un second groupe de premiers cordons chauffants raccordés en série, un premier groupe de premiers cordons chauffants raccordés en parallèle peut être raccordé en série avec un second groupe de premiers cordons chauffants raccordés en parallèle, voire un premier groupe de premiers cordons chauffants raccordés en parallèle peut être raccordé en série ou en parallèle avec un second groupe de premiers cordons chauffants raccordés en série. De même avec les seconds cordons chauffants constituant la ceinture de blocage thermique. En d'autres termes, sur chaque première couche de support, les cordons peuvent être reliés selon n'importe quel arrangement faisant intervenir des mises en séries et/ou en parallèle de ces cordons. Cela permet d'avoir une meilleure maîtrise de la puissance de chauffe apportée en tout point sur chaque première couche de support afin d'obtenir la ou les températures désirées partout sur la surface de traitement thermique et partout sur la ou les ceintures de blocage thermique, avec un nombre réduit de premiers et seconds cordons chauffants.

On entend par au moins une première couche de support le fait que le dispositif objet de l'invention peut comprendre plusieurs premières couches de support superposées, chaque première couche de support recevant au moins un premier cordon chauffant et au moins un second cordon chauffant, les premiers cordons chauffants des premières couches de support superposées définissant en combinaison la surface de traitement thermique et les seconds cordons chauffants des premières couches de support superposées définissant en combinaison l'au moins une ceinture de blocage thermique. La superposition des premières couches de support permet d'accroître la puissance thermique par unité de surface par rapport à la solution utilisant une seule première couche de support. A l'inverse, cela permet pour une même puissance thermique par unité de surface de limiter l'intensité du courant circulant dans les premiers et seconds cordons chauffants et par conséquent de réduire leur température maximale en régime transitoire, ce qui permet de ralentir le vieillissement de ceux-ci.

Ainsi, selon une réalisation du dispositif objet de l'invention, celui-ci comprend deux premières couches de support superposées, au moins un premier cordon chauffant et au moins un second cordon chauffant étant agencés sur chaque première couche de support. Les premiers cordons chauffants des deux premières couches de support sont superposés et définissent en combinaison la surface de traitement et les seconds cordons chauffants des deux premières couches de support sont superposés et définissent en combinaison l'au moins une ceinture de blocage thermique.

Selon une réalisation préférentielle de l'invention, le dispositif comprend une seconde couche de support agencée au-dessus de l'au moins une première couche de support. En outre, le premier réseau de fils et le second réseau de fils sont agencés sur la seconde couche de support. Cela permet de séparer physiquement le premier réseau de fils et le second réseau de fils vis-à-vis des premiers cordons chauffants et des seconds cordons chauffants. On pourrait toutefois prévoir, pour des tapis suffisamment simples, une variante sans cette seconde couche de support.

Selon cette réalisation préférentielle du dispositif objet de l'invention, l'au moins un premier cordon chauffant et l'au moins un second cordon chauffant sont fixés sur une face supérieure de l'au moins une première couche de support grâce à des premiers moyens de fixation, de préférence par couture. En outre, le premier réseau de fils et le second réseau de fils sont fixés sur une face supérieure de la seconde couche de support grâce à des seconds moyens de fixation, de préférence par couture. Ainsi, on garantit un maintien en position très précis des cordons chauffants définissant la surface de traitement thermique et l'au moins une ceinture de blocage thermique, de même pour le premier réseau de fils et le second réseau de fils qui alimentent lesdits cordons chauffants.

Selon cette réalisation préférentielle du dispositif, le premier réseau de fils comprend des premiers fils électriques de connexion qui passent au moins au travers de la seconde couche de support et sont raccordés par soudure à l'au moins un premier cordon chauffant. De même, le second réseau de fils comprend des seconds fils électriques de connexion qui passent au moins au travers de la seconde couche de support et sont raccordés préférentiellement par soudure à l'au moins un second cordon chauffant. D'autres moyens de raccordement permanent peuvent être envisagés en substitution d'une soudure, par exemple l'utilisation d'une bague de sertissage. On entend par « passe au moins au travers de la seconde couche de support » le fait que les premiers et seconds fils électriques de connexion passent au travers de la seconde couche de support et de la première couche de support supérieure, en la présence de deux premières couches de support superposées, comme décrit précédemment.

Selon cette réalisation préférentielle du dispositif, l'au moins une première couche de support et la seconde couche de support sont conçues dans un matériau fibreux isolant électriquement, de préférence en fibres de verre ou de basalte

Selon cette réalisation préférentielle du dispositif, l'au moins une première couche de support et la seconde couche de support sont conçues dans un matériau fibreux résistant à une température d'au moins 450°C, de préférence en fibres de verre ou de basalte.

Selon une réalisation préférentielle du dispositif, l'au moins un premier cordon chauffant et l'au moins un second cordon chauffant comprennent chacun une âme électriquement isolante en fibres sèches, sur laquelle est enroulé un fil résistif, l'ensemble pouvant être recouvert ou non d'une gaine tressée de fibres sèches isolantes sur toute sa longueur, afin d'augmenter le niveau d'isolation électrique du cordon.

Selon une première réalisation du dispositif objet de l'invention, celui-ci comprend deux couches de renfort entre lesquelles sont prises en sandwich, notamment, l'au moins une première couche de support mettant en oeuvre la surface de traitement thermique et l'au moins une ceinture de blocage thermique, le premier réseau de fils et le second réseau de fils. En outre, un système d'assemblage est mis en oeuvre entre les deux couches de renfort de sorte à former une enveloppe dont un des bords laisse sortir le premier réseau de fils et le second réseau de fils.

De préférence, selon cette première réalisation du dispositif, le système d'assemblage permet une fixation amovible entre les deux couches de renfort. Cela a pour but de permettre l'accès aux premiers et seconds cordons chauffants et aux premier et second réseaux de fils afin de réaliser d'éventuelles opérations de maintenance sur ceux-ci.

De préférence, selon cette première réalisation du dispositif, les deux couches de renfort sont constituées dans un matériau fibreux isolant électriquement, de préférence en fibres de verre ou de basalte.

De préférence, selon cette première réalisation du dispositif, les deux couches de renfort sont conçues dans un matériau fibreux résistant à une température d'au moins 450°C, de préférence en fibres de verre ou de basalte.

De préférence, selon cette première réalisation du dispositif, un grillage métallique est agencé entre la couche de renfort inférieure et l'au moins une première couche de support, ledit grillage métallique étant raccordé à un fil électrique destiné à être mis à la terre. Cela permet de drainer les charges électrostatiques qui s'accumulent à la surface de la pièce composite, compte tenu de l'emploi de couches de renfort en matériau isolant électrique.

De préférence, selon cette première réalisation du dispositif, celui-ci comprend une couche isolante thermiquement agencée au-dessus de l'au moins une première couche de support mettant en oeuvre la surface de traitement thermique et l'au moins une ceinture de blocage thermique. Selon une réalisation, la couche isolante est positionnée juste en-dessous de la face inférieure de la couche de renfort supérieure, ce qui permet de maintenir convenablement la couche isolante à l'intérieur de l'enveloppe formée par l'assemblage des deux couches de renfort. Il est toutefois envisageable, en variante, de positionner la couche isolante au-dessus de la face supérieure de la couche de renfort supérieure, la couche isolante étant alors positionnée à l'extérieur, au-dessus de l'enveloppe formée par l'assemblage des deux couches de renfort.

Selon une seconde réalisation du dispositif objet de l'invention, celui-ci comprend une couche de recouvrement, de préférence en matériau silicone, dans laquelle sont noyés notamment l'au moins une première couche de support mettant en oeuvre la surface de traitement thermique et l'au moins une ceinture de blocage thermique, le premier réseau de fils et le second réseau de fils, ladite couche de recouvrement laissant sortir au niveau d'un de ses bords le premier réseau de fils et le second réseau de fils.

Selon le dispositif objet de l'invention, celui-ci comprend au moins deux capteurs de mesure de la température agencés sur l'au moins une première couche de support au niveau de l'au moins un premier cordon chauffant et de l'au moins un second cordon chauffant. Ces capteurs de mesure permettent d'effectuer un contrôle des températures des premiers et seconds cordons chauffants afin de réguler celles-ci depuis une armoire de régulation sur laquelle sont raccordés les premier et second réseaux de fils sur deux voies de régulation distinctes. Selon une réalisation, ces capteurs de mesure de la température sont des thermocouples, mais des variantes sont envisageables.

Selon une réalisation du dispositif objet de l'invention, celui-ci comprend un bloc malléable d'étanchéité, de préférence en silicone, au travers duquel passent un câble d'alimentation électrique incorporant le premier réseau de fils et le second réseau de fils et un câble de mesure de température. Ce bloc malléable participe à l'étanchéité lors d'une mise sous vide de la pièce composite et dudit dispositif, durant le préformage ou la consolidation de ladite pièce composite.

L'invention concerne également une installation pour la réalisation de préformage ou de consolidation de préformes fibreuses de pièces composites, laquelle comprend un moule muni d'une face supérieure qui comporte un pourtour et une matrice constituant le négatif de la pièce composite à réaliser, un dispositif multicouche chauffant souple présentant les caractéristiques de l'une des revendications 1 à 19, la surface de traitement thermique et l'au moins une ceinture de blocage thermique dudit dispositif étant adaptées à la pièce composite à réaliser, une membrane de mise sous vide comprenant un bord périphérique apte venir en contact étanche sur le pourtour de la face supérieure du moule et une valve antiretour, un dispositif d'aspiration d'air comprenant un conduit apte à être raccordé à ladite valve antiretour, et une armoire de régulation sur laquelle sont raccordés le premier réseau de fils et le second réseau de fils, ladite armoire étant configurée pour réguler indépendamment la température du au moins un premier cordon chauffant et du au moins un second cordon chauffant sur l'au moins une première couche de support.

### Brève description des figures

Les caractéristiques et avantages de l'invention apparaîtront à la lecture de la description suivante s'appuyant sur des figures, parmi lesquelles :
- la figure 1 schématise une installation pour la réalisation de préformage ou de consolidation de préformes fibreuses de pièces composites, selon l'invention ;
- la figure 2 schématise en coupe la composition d'un dispositif multicouche chauffant souple pour la réalisation de préformage ou de consolidation de préformes fibreuses de pièces composites, selon l'invention, comportant une première couche de support et une seconde couche de support au-dessus de la première couche de support ;
- la figure 3 schématise un premier exemple d'agencement d'une surface de traitement thermique et d'une ceinture de blocage thermique ;
- la figure 4 schématise un second exemple d'agencement d'une surface de traitement thermique et d'une ceinture de blocage thermique ;
- la figure 5 schématise un troisième exemple d'agencement d'une surface de traitement thermique et d'une ceinture de blocage thermique ;
- la figure 6 schématise un quatrième exemple d'agencement d'une surface de traitement thermique et de deux ceintures de blocage thermique ;
- la figure 7 schématise un premier exemple d'agencement d'un cordon chauffant sur une surface de traitement thermique ou sur une ceinture de blocage thermique ;
- la figure 8 schématise un second exemple d'agencement d'un cordon chauffant sur une surface de traitement thermique ou sur une ceinture de blocage thermique ;
- la figure 9 schématise un troisième exemple d'agencement d'un cordon chauffant sur une surface de traitement thermique ou sur une ceinture de blocage thermique ;
- la figure 10 schématise un quatrième exemple d'agencement de deux cordons chauffants sur une surface de traitement thermique ou sur une ceinture de blocage thermique ;
- la figure 11 schématise un cinquième exemple d'agencement d'un cordon chauffant sur une surface de traitement thermique ou sur une ceinture de blocage thermique ;
- la figure 12 schématise un sixième exemple d'agencement d'un cordon chauffant sur une surface de traitement thermique ou sur une ceinture de blocage thermique ;
- la figure 13 schématise un septième exemple d'agencement d'un cordon chauffant sur une surface de traitement thermique ou sur une ceinture de blocage thermique ;
- la figure 14 schématise un mode de réalisation d'un premier ou second cordon chauffant ;
- la figure 15 schématise une connexion électrique entre une extrémité d'un premier ou second cordon chauffant et une extrémité d'un fil de premier ou second réseau de fils ;
- la figure 16 illustre une vue d'ensemble d'un dispositif multicouche chauffant souple pour la réalisation de préformage ou de consolidation de préformes fibreuses de pièces composites, selon l'invention ;
- la figure 17 schématise en coupe une variante de mise en oeuvre du dispositif multicouche chauffant souple selon l'invention ;
- la figure 18 schématise un cinquième exemple d'agencement d'une surface de traitement thermique et d'une ceinture de blocage thermique ;
- la figure 19 illustre un second exemple d'agencement d'une surface de traitement thermique et d'une ceinture de blocage thermique sur le tapis chauffant comportant une première couche de support et une seconde couche de support au-dessus de la première couche de support ;
- la figure 20 illustre une variante de la figure 2, avec une couche isolante thermiquement placée différemment ;
- la figure 21 illustre un troisième exemple d'agencement d'une surface de traitement thermique et d'une ceinture de blocage thermique sur le tapis chauffant comportant deux premières couches de support superposées et une seconde couche de support au-dessus des deux premières couches de support ;
- la figure 22 schématise une connexion électrique entre un premier ou second cordon chauffant sur une première couche de support et un fil de premier ou second réseau de fils sur la seconde couche de support et une connexion électrique entre un premier ou second cordon chauffant sur une seconde couche de support et un fil de premier ou second réseau de fils sur la seconde couche de support.

### Description détaillée

Dans la suite de la description, le terme tapis chauffant désigne le dispositif multicouche chauffant souple pour la réalisation de préformage ou de consolidation de préformes fibreuses de pièces composites, objet de l'invention.

En outre, les mêmes références sont utilisées pour désigner les mêmes caractéristiques ou leurs équivalents selon les différentes variantes de réalisation, sauf indication dans le texte.

En outre, les termes haut, bas, supérieur et inférieur qui pourraient être utilisés dans la description le seront en considération de la position normale du tapis chauffant posé sur un plan horizontal.

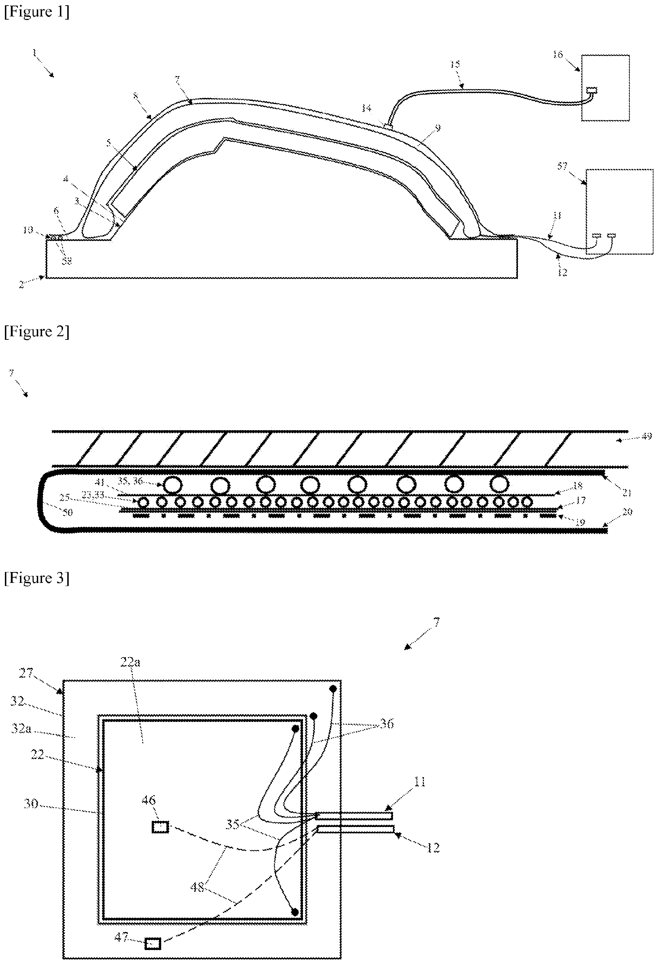

La figure 1 illustre une installation 1 qui comprend un moule 2. Ce moule 2 comprend sur sa face supérieure 3 une matrice 4 constituant le négatif d'une pièce composite 5 à préformer ou à consolider en vue de sa fabrication. Cette face supérieure 3 comprend également un pourtour 6 entourant ladite matrice 4. L'installation 1 comprend également un tapis chauffant 7 qui recouvre complètement la pièce composite 5, une couche de protection (non illustré sur la figure 1) étant interposée entre le tapis chauffant 7 et la pièce composite 5. Ce tapis chauffant 7 est lui-même intégralement recouvert par une membrane 8 permettant de réaliser une mise sous vide de l'espace 9 contenant la matrice 4, la pièce composite 5 et le tapis chauffant 7 lors d'une opération de consolidation, de sorte que ladite membrane 8 vienne faire pression contre le tapis chauffant 7 et la pièce composite 5 et chasse l'air résiduel contenu entre les nappes de fibres de carbone unidirectionnelle enduites de résine thermoplastique, empilées et pré-consolidées.

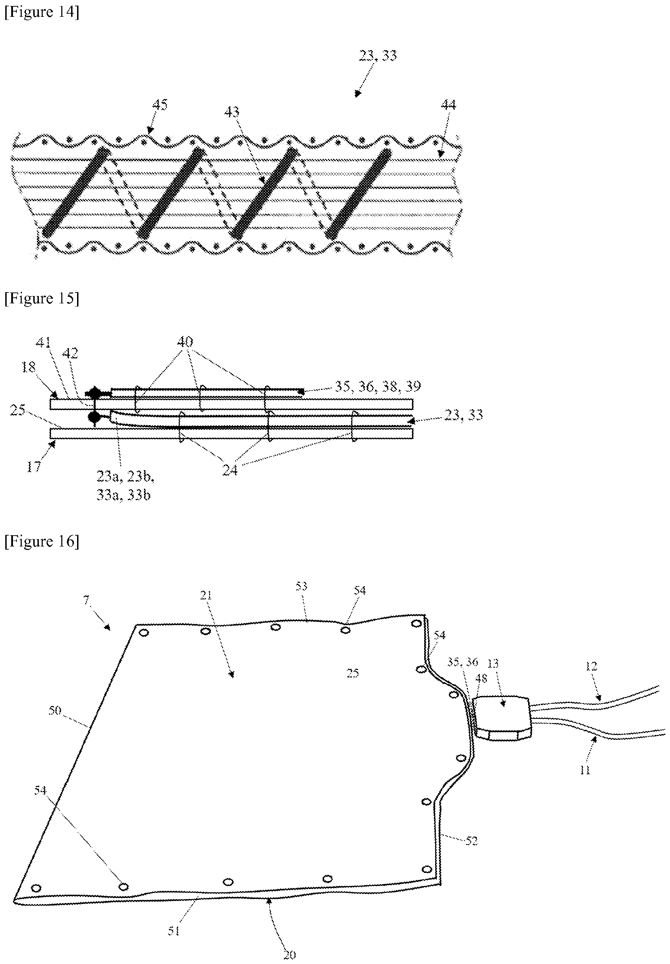

Afin de réaliser le vide, le bord périphérique 10 de la membrane 8 doit être en contact étanche avec le pourtour 6 de la face supérieure 3 du moule 2. La membrane 8 peut être constituée d'une bâche en matière plastique ; dans ce cas, un mastic 58 sera disposé entre le bord périphérique 10 et le pourtour 6 et, le câble d'alimentation électrique 11 et le câble de mesure de la température 12 raccordés au tapis chauffant 7 (détaillés dans la suite de la description) sont noyés dans ce mastic 58 à sa traversée afin d'assurer l'étanchéité entre ledit bord périphérique 10 et ledit pourtour 6 lors de la mise sous vide de la membrane 8. Ce mastic 58 en ruban est par exemple constitué d'une matière de type BUTYL^{®}. La membrane 8 peut, selon une variante, être constituée d'une matière silicone avec un bord périphérique 10 épais, de sorte que ledit bord périphérique 10 assure directement une étanchéité avec le pourtour 6 lors d'une mise sous vide de la membrane 8, c'est-à-dire sans l'ajout de mastic. Dans ce cas, le tapis chauffant 7 comportera un bloc en silicone 13 de petite taille dans lequel passeront le câble d'alimentation électrique 11 et le câble de mesure de température 12, comme l'illustre la figure 16, ledit bloc en silicone 13 s'écrasant et épousant le bord périphérique 10 lors de la mise sous vide de la membrane 8 afin d'assurer cette étanchéité avec le pourtour 6. La membrane 8 comprend une valve antiretour14 raccorder au moyen d'un conduit 15 à un dispositif d'aspiration d'air 16. Sur cette figure 16, un seul câble d'alimentation électrique 11 et un seul câble de mesure de température 12 sont illustrés, leurs nombres pouvant toutefois être supérieurs selon le tapis chauffant 7 mis en oeuvre.

Les figures 2 à 16 font référence à un mode préférentiel de réalisation du tapis chauffant 7 utilisé sur l'installation 1 précitée. Tel qu'illustré sur la figure 2, le tapis chauffant 7 comprend une première couche de support 17, une seconde couche de support 18 disposée au-dessus de la première couche de support 17, un grillage métallique 19 disposé en-dessous de la première couche de support 17, une couche de renfort inférieure 20 et une couche de renfort supérieure 21. Les deux couches de support 17, 18 et le grillage métallique 19 sont pris en sandwich entre les deux couches de renfort 20, 21 qui les enveloppent. Ces différentes couches 17, 18, 20, 21 et le grillage métallique 19 sont souples, ce qui permet au tapis chauffant 7 d'épouser convenablement la pièce composite 5. Ces différentes couches 17, 18, 20, 21 sont réalisées dans un tissu sec assurant une isolation électrique et disposant d'une tenue à des températures d'au moins 450°C, celles-ci étant de préférence conçues en fibres de verre ou de basalte. Le grillage métallique 19 est mis à la terre en raccordant celle-ci à l'un des fils du câble d'alimentation électrique 11, ce qui permet de dissiper les charges électrostatiques qui s'accumulent à la surface de la pièce composite 5, compte tenu de l'emploi de couches de renfort 20, 21 en matériau isolant électrique.

En regard des figures 3 à 15, le tapis chauffant 7 comprend une surface de traitement thermique 22 dont les formes et dimensions dépendent de et correspondent à la surface de la pièce composite 5 à fabriquer. Cette surface de traitement thermique 22 est constituée d'un ou plusieurs premiers cordons chauffants 23 qui sont agencés en serpentin ou en spirale, de préférence, et fixés par couture 24 sur la face supérieure 25 de la première couche de support 17, comme l'illustre la figure 15. Les coutures 24 du ou des premiers cordon chauffants 23 sur la première couche de support 17 sont réalisées en suivant un patron de sorte que l'emplacement du ou des cordons chauffants 23 sur la première couche de support 17 est précis et assure une distribution thermique contrôlée au niveau de la face fonctionnelle 20a de la couche de renfort inférieure 20, correspondant à un cahier des charges déterminé pour chaque pièce composite 5 à fabriquer. Les coutures 24 seront avantageusement réalisées automatiquement par le biais d'une machine à coudre ou brodeuse à commande numérique.

Le nombre et l'agencement de premiers cordons chauffants 23 dépendront des différentes épaisseurs existant sur la pièce composite 5 et de leurs formes et, par conséquent, de la nécessité de chauffer différemment ladite pièce composite 5 en fonction de ces épaisseurs. Par exemple, sur la figure 1, la pièce composite 5 présente sur la vue en coupe trois zones avec des épaisseurs différentes, ce qui nécessitera de décomposer la surface de traitement thermique 22 sur le tapis chauffant 7 en trois parties concordant avec lesdites trois zones.

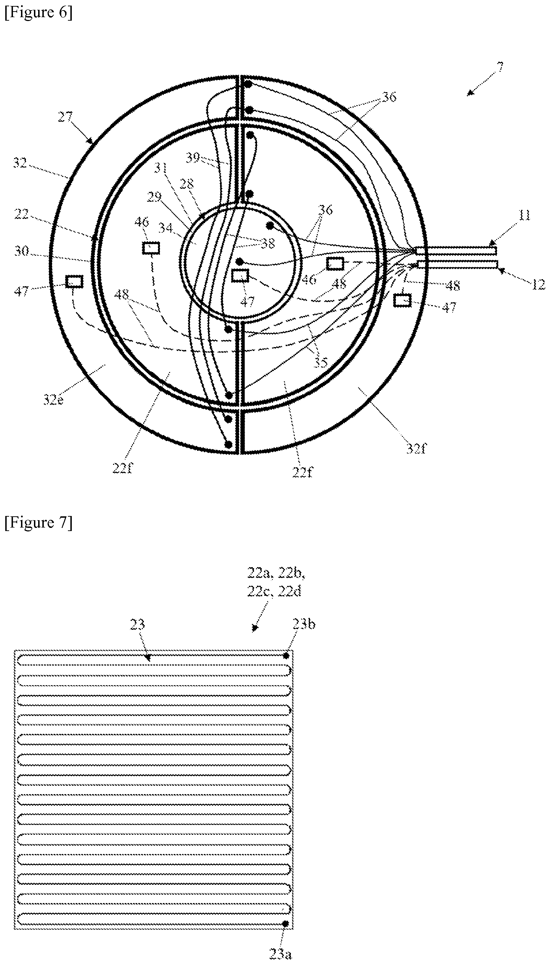

Sur la figure 3, la surface de traitement thermique 22 est formée d'une seule partie 22a rectangulaire qui pourra être constituée d'un seul premier cordon chauffant 23 disposé en serpentin sur toute cette partie 22a, comme le montre la figure 7. On pourrait envisager de disposer ce premier cordon chauffant 23 en spirale sur toute cette partie 22a, voire d'autres agencements.

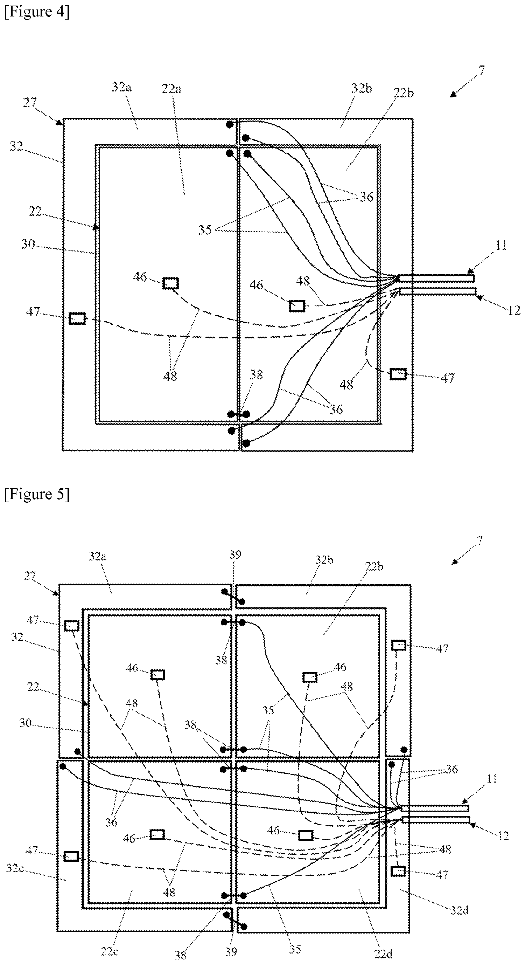

Sur la figure 4, la surface de traitement thermique 22 est rectangulaire et formée de deux parties 22a, 22b rectangulaires constituées chacune d'un premier cordon chauffant 23 disposé en serpentin sur la partie 22a, 22b correspondant, comme le montre la figure 7, ces deux parties 22a, 22b pouvant chauffer à des températures différentes selon les épaisseurs sur la pièce composite 5. On pourrait envisager de disposer ces premiers cordons chauffants 23 en spirale sur ces deux parties 22a, 22b, voire d'autres agencements.

Sur la figure 5, la surface de traitement thermique 22 est rectangulaire et formée de quatre parties 22a, 22b, 22c, 22d rectangulaires constituées chacune d'un premier cordon chauffant 23 disposé en serpentin sur la partie 22a, 22b, 22c, 22d correspondant, comme le montre la figure 7, ces quatre parties 22a, 22b, 22c, 22d pouvant chauffer à des températures différentes selon les épaisseurs sur la pièce composite 5. On pourrait envisager de disposer ces premiers cordons chauffants 23 en spirale sur ces quatre parties 22a, 22b, 22c, 22d, voire d'autres agencements.

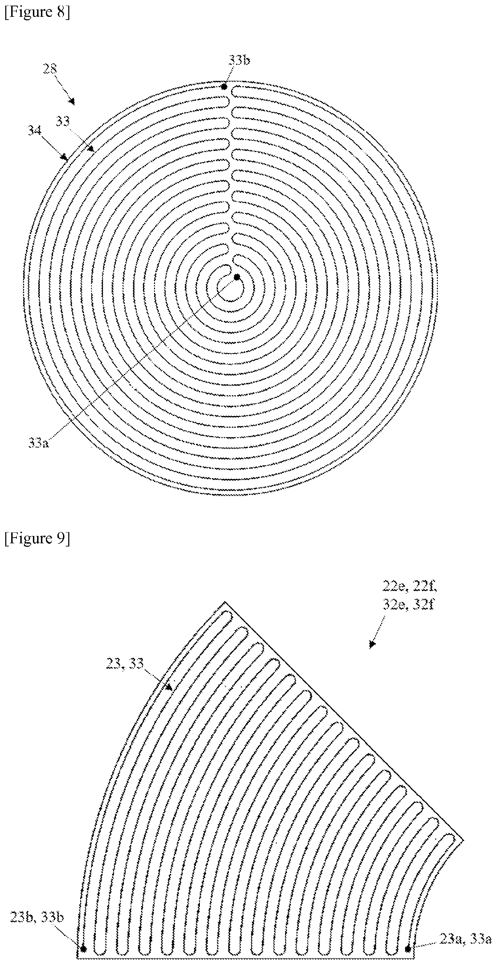

Sur la figure 6, la surface de traitement thermique 22 est un anneau plat formée de deux parties arquées 22e, 22f constituées chacune d'un premier cordon chauffant 23 disposé en serpentin sur la partie 22e, 22f correspondant, comme le montre la figure 9, ces deux parties 22e, 22f pouvant chauffer à des températures différentes selon les épaisseurs sur la pièce composite 5. Sur cette figure 9, seule une portion d'arc est illustrée, mais le principe reste identique en augmentant l'angle de cette portion d'arc sur un demi-cercle, comme pour les deux parties 22e, 22f. On pourrait envisager de disposer ces premiers cordons chauffants 23 en spirale sur ces deux parties 22e, 22f, voire d'autres agencements.

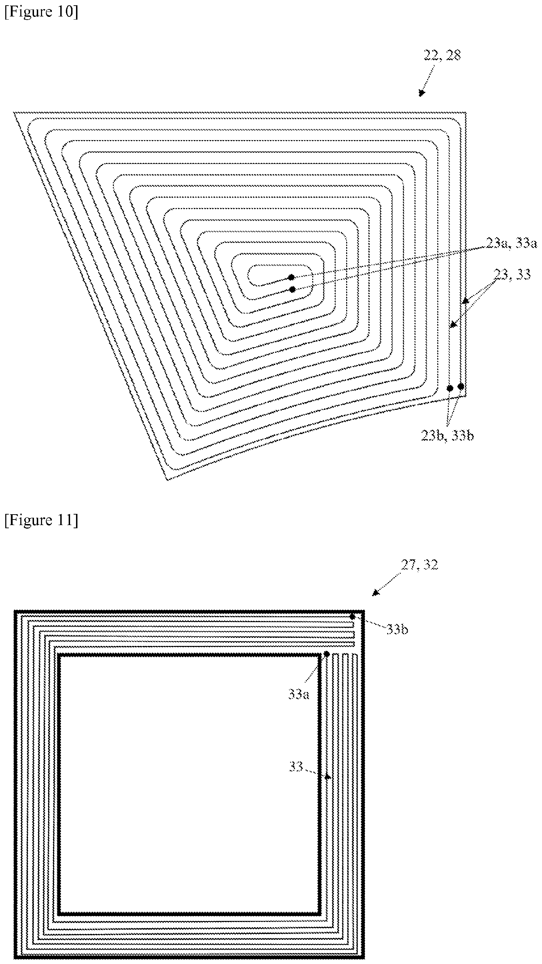

Bien évidemment d'autres formes diverses et variées de parties de la surface de traitement thermique 22 pourraient être envisagées sur le même principe, selon la forme et les épaisseurs sur la pièce composite 5, comme par exemple une forme polygonale quelconque 26 sur laquelle seraient agencés en spirale deux premiers cordons chauffants 23, tel qu'illustré en figure 10, pour constituer ladite surface de traitement thermique 22. On pourrait envisager de disposer ces premiers cordons chauffants 23 en serpentin sur cette forme polygonale, voire d'autres agencements. Bien entendu, un, deux ou plus de deux cordons chauffants 23 pourraient être agencés selon le même principe que sur la figure 10 pour mettre en oeuvre ladite surface de traitement thermique 22, voire une ceinture de blocage thermique comme décrite ci-après. Cela est également envisageable avec d'autres formes que celle de la figure 10.

En regard des figures 3 à 15, le tapis chauffant 7 comprend une ou plusieurs ceintures de blocage thermique 27, 28, selon que la surface de traitement thermique 22 est pleine, comme sur les figures 3 à 5, ou dispose d'un évidement 29, comme sur la figure 6. La ceinture de blocage thermique 27 évite les déperditions thermiques du côté de la périphérie externe 30 de la surface de traitement thermique 22 et, dans le cas de la figure 6, la ceinture de blocage thermique 28 évite les déperditions thermiques du côté de la périphérie interne 31 de la surface de traitement thermique 22, ce qui permet d'obtenir une stabilisation rapide des températures sur toute la surface de la pièce composite 5 à préformer ou à consolider et recouverte par ladite surface de traitement thermique 22.

Sur la figure 3, la ceinture de blocage 27 est formée d'un cadre 32 en une seule partie 32a disposée à la périphérie externe 30 de la surface de traitement thermique 22, un second cordon chauffant 33 en serpentin permettant de constituer ledit cadre 32, comme le montre la figure 11. On pourrait envisager de disposer ce second cordon chauffant 33 en spirale sur ce cadre 32, voire d'autres agencements.

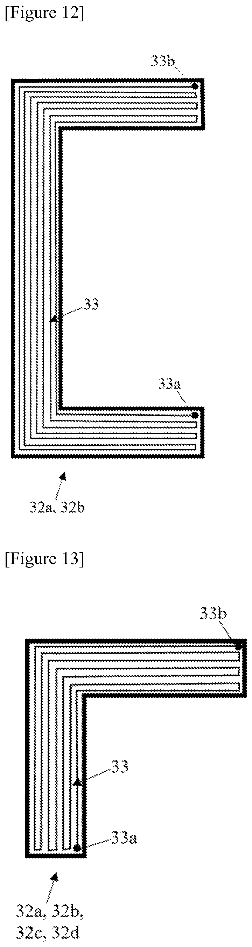

Sur la figure 4, la ceinture de blocage 27 est formée d'un cadre 32 en deux parties 32a, 32b en forme de U disposées à la périphérie externe 30 de la surface de traitement thermique 22, chaque partie de cadre 32a, 32b étant constituée d'un second cordon chauffant 33 en serpentin, comme le montre la figure 12. Ces deux parties de cadre 32a, 32b correspondent respectivement avec les deux parties 22a, 22b de la surface de traitement thermique 22, comme le montre la figure 4. On pourrait envisager de disposer ces seconds cordons chauffants 33 en spirale sur ces deux parties 32a, 32b du cadre 32, voire d'autres agencements.

Sur la figure 5, la ceinture de blocage 27 est formée d'un cadre 32 en quatre parties 32a, 32b, 32c, 32d en forme d'équerre disposées à la périphérie externe 30 de la surface de traitement thermique 22, chaque partie de cadre 32a, 32b, 32c, 32d étant constituée d'un second cordon chauffant 33 en serpentin, comme le montre la figure 13. On pourrait envisager de disposer ces seconds cordons chauffants 33 en spirale sur ces quatre parties 32a, 32b, 32c, 32d du cadre 32, voire d'autres agencements.

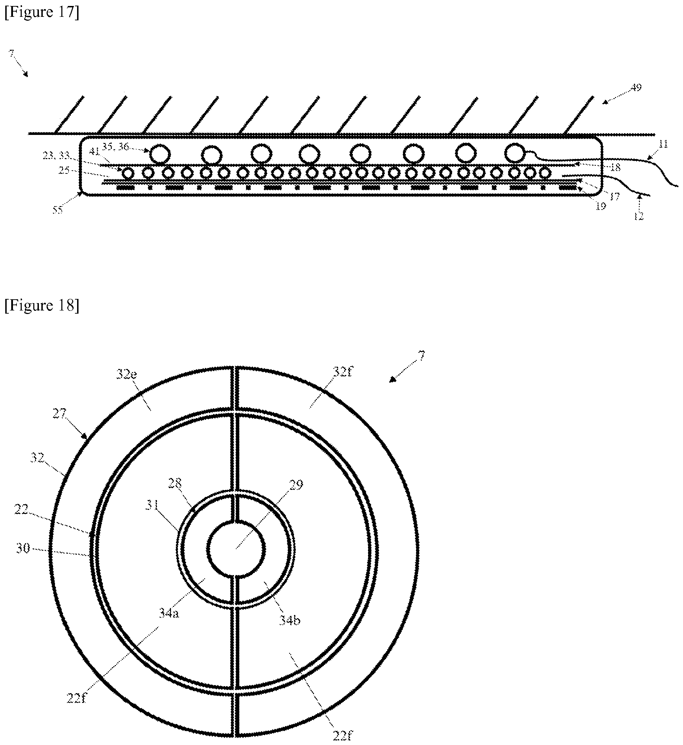

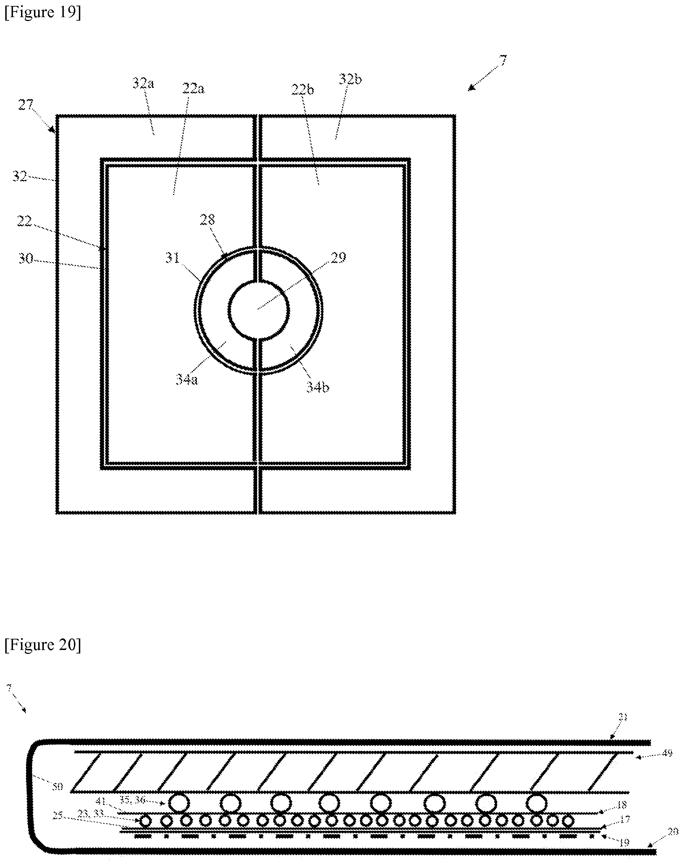

Sur la figure 6, une première ceinture de blocage 27 est formée d'un cadre 32 circulaire en deux parties 32e, 32f en forme d'arc disposées à la périphérie externe 30 circulaire de la surface de traitement thermique 22, chaque partie arquée 32e, 32f étant constituée d'un second cordon chauffant 33 en serpentin, comme le montre la figure 9. Sur cette figure 9, seule une portion d'arc est illustrée, mais le principe reste identique en augmentant l'angle de cette portion d'arc sur un demi-anneau, comme pour les deux parties 32e, 32f. On pourrait envisager de disposer ces seconds cordons chauffants 33 en spirale sur ces deux parties 32e, 32f du cadre 32 circulaire, voire d'autres agencements. En outre, sur cette figure 6, une seconde ceinture de blocage 28 est formée d'un disque 34 disposé à l'intérieur de la périphérie interne 31 de la surface de traitement thermique 22, un second cordon chauffant 33 en serpentin permettant de constituer ledit disque 34, comme le montre la figure 8. On pourrait envisager de disposer ce second cordon chauffant 33 en spirale sur ce disque 34, voire d'autres agencements. La forme polygonale de la figure 7 ou de la figure 10, voire toutes autres formes quelconques, pourraient être envisagées pour la mise en oeuvre d'une seconde ceinture de blocage thermique 28 à la périphérie interne 31 d'une surface de traitement thermique 22 quelconque. Ce disque 34 constituant la seconde ceinture de blocage 28 peut aussi être remplacé par deux demi-anneaux 34a, 34b, par exemple, comme l'illustre la variante de la figure 18 qui reprend les autres caractéristiques de la variante de la figure 6. La variante du tapis chauffant 7 de la figure 19 reprend les caractéristiques de la variante de la figure 4, sur laquelle est toutefois prévu également un évidement 29 et une seconde ceinture de blocage 28 constituée de deux demi-anneaux 34a, 34b.

Ainsi, on comprendra que les figures 7 à 13, 18 et 19 n'illustrent que quelques exemples possibles et non limitatifs de formes pouvant entrer dans la composition d'une surface de traitement thermique 22 ou d'une ceinture de blocage thermique 27, 28. Les seconds cordons chauffants 33 seront, comme pour les premiers cordons chauffants 23, fixés par couture 24 sur la face supérieure 25 de la première couche de support 17, comme l'illustre la figure 15.

En regard des figures 2 à 6 et 15, le tapis chauffant 7 comprend également un premier réseau de fils 35 qui alimente le ou les premiers cordons chauffants 23 sur la surface de traitement thermique 22. De même, la tapis chauffant 7 comprend un second réseau de fils 36 qui alimente le ou les seconds cordons chauffants 33 sur la ceinture de blocage thermique 27 et sur la deuxième ceinture de blocage thermique 28, en la présence de celle-ci, comme dans le cas de la figure 6. Le premier réseau de fils 35 et le second réseau de fils 36 sont réunis au sein d'un même câble d'alimentation électrique 11.

Dans le cas où plusieurs premiers cordons chauffants 23 sont présents sur la surface de traitement thermique 22, ceux-ci peuvent être raccordés en série et/ou en parallèle au moyen de premiers fils électriques de liaison 38, selon les différentes températures souhaitées sur ladite surface de traitement thermique 22 et afin d'avoir une meilleure maîtrise de la puissance de chauffe et d'offrir un plus large panel de températures avec un nombre réduit de premiers cordons chauffants 23. De même, dans le cas où plusieurs seconds cordons chauffants 33 sont présents sur la ou les ceintures de blocage thermique 27, 28, ceux-ci peuvent être raccordés en série et/ou en parallèle au moyen de seconds fils électriques de liaison 39, selon les différentes températures souhaitées sur desdites ceintures de blocage thermique 27, 27 et afin d'avoir une meilleure maîtrise de la puissance de chauffe et d'offrir un plus large panel de températures avec un nombre réduit de seconds cordons chauffants 33. L'implantation de plusieurs premiers cordons chauffants 23 et de plusieurs seconds cordons chauffants 33 sur une même première couche de support 17 présente pour avantage de mieux maîtriser la puissance de chauffe apportée en tout point sur la première couche de support 17 afin d'obtenir la ou les températures désirées en tout point de la surface de traitement thermique 22 et en tout point de la ou des ceintures de blocage thermique 27, 28, avec un nombre réduit de premiers et seconds cordons chauffants 23, 33.

A titre d'exemple illustratif et non limitatif, sur la figure 4, les deux parties 22a, 22b de la surface de traitement thermique 22 sont raccordées en série par des premiers fils électriques de liaison 38. Sur la figure 5, les deux premières parties 22a, 22b de la surface de traitement thermique 22 sont raccordées en parallèle par des premiers fils électriques de liaison 38, de même pour les deux secondes parties 22c, 22d de ladite surface de traitement thermique 22, et les deux premières parties de cadre 32a, 32b de la ceinture de blocage thermique 27 sont raccordées en série par des seconds fils électriques de liaison 39, de même pour les deux secondes parties de cadre 32c, 32d de la ceinture de blocage thermique 27. Sur la figure 6, les deux parties arquées 22e, 22f de la surface de traitement thermique 22 sont raccordées en série par des premiers fils électriques de liaison 38 et les deux parties arquées 32e, 32f de la ceinture de blocage thermique 27 sont raccordées en série par des seconds fils électriques de liaison 39.

Le premier réseau de fils 35, le second réseau de fils 36, les premiers fils de liaison électriques 38 et les seconds fils électriques de liaison 39 sont fixés par couture 40 sur la face supérieure 41 de la seconde couche de support 18 et sont raccordés par soudure avec l'une des extrémité 23a, 23b, 33a, 33b d'un premier cordon chauffant 23 ou d'un second cordon chauffant 33 par l'intermédiaire de fils électriques de connexion 42 qui passent au travers de la seconde couche de support 18 et sont soudés avec lesdits fils 35, 36, 38 ou 39, comme l'illustre la figure 15.

Sur la figure 14 est illustrée une réalisation préférentielle des premiers ou seconds cordons chauffants 23, 33 qui comportent chacun un fil résistif 43 entourant une âme 44 électriquement isolante, cette âme 44 étant constituée de fibres sèches formées comme une mèche. Le fil résistif 43 est raccordé par soudure au fil électrique de connexion 42 précité. Le premier ou second cordon chauffant 23, 33 peut éventuellement comporter, en complément, une gaine 45 de fibre sèche entourant ledit fil résistif 43. Le choix d'intégrer ou non cette gaine 45 dépendra notamment de la conductivité électrique des couches de support 17, 18 et de renfort 20, 21, selon la matière utilisée pour celles-ci. Cette gaine 45 peut résulter d'un guipage, d'un tressage ou d'un tricotage. Le diamètre de la section des cordons chauffants 23, 33 est faible au regard de l'épaisseur des couches de support 17, 18 et des couches de renfort 20,21, de sorte que les déformations des cordons chauffants 23, 33 sous l'effet des variations de température sont encaissées par lesdites couches 17, 18, 20, 21 et que la face fonctionnelle 20a de la couche de renfort inférieure 20 venant au contact de la pièce composite 5 est préservée de toute déformation.

En regard des figures 3 à 6, des premiers thermocouples 46 sont agencés sur la première couche de support 17, sur les différentes parties 22a, 22b, 22c, 22d, 22e, 22f de la surface de traitement thermique 22, en sorte de relever les températures de celles-ci. De même, des seconds thermocouples 47 sont agencés sur la première couche de support 17, sur les différentes parties 32a, 32b, 32c, 32d, 32e, 32f de la ceinture de blocage thermique 27 et sur la seconde ceinture de blocage thermique 28 dans le cas de la figure 6, en sorte de relever les températures de celles-ci. Le câble de mesure de température 12 dispose de fils électriques de raccordement 48 qui sont fixés par couture sur la face supérieure 41 de la seconde couche de support 18 et raccordés à ces thermocouples 46, 47 par des fils électriques de connexion 42, de la même manière que les fils 35, 36, 38, 39 sont raccordés aux premiers et seconds cordons chauffants 23, 33, tel que décrit précédemment à l'appui de la figure 15.

Le câble d'alimentation électrique 11 des premiers et seconds cordons chauffants 23, 33 et le câble de mesure de température 12 sont raccordés en amont à une armoire de régulation 57 qui récupère les mesures des températures sur la surface de traitement thermique 22 et sur la ou les ceinture de blocage thermique 27, 28 pour ajuster les alimentations électriques des premiers et seconds cordons chauffants 23, 33. Cela permet un pilotage précis de la cuisson de la pièce composite 5.

En regard de la figure 2, le tapis chauffant 7 comprend une couche isolante thermiquement 49, par exemple constituée d'une matière minérale de type céramique. Sur la figure 7, cette couche isolante thermiquement 49 est disposée au-dessus de la couche de renfort supérieure 21, mais elle pourra être positionnée entre la seconde couche de support 18 et la couche de renfort supérieure 21, comme l'illustre la figure 20. Cette couche isolante thermiquement 49 permet avantageusement d'utiliser une bâche dans une matière plastique moins onéreuse pour la constitution de la membrane 8, car ladite bâche n'a pas à résister à des températures de l'ordre de 450°C. En effet, la présence de cette couche isolante thermiquement 49 permet d'abaisser la température au contact de la membrane, à une température inférieure à 60°C.

En regard de la figure 16, la couche de renfort inférieure 20 et la couche de renfort supérieure 21 sont mises en oeuvre au moyen d'une même couche de renfort pliée en deux au niveau d'un bord commun 50, les trois autres bords 51, 52, 53 des couches de renfort inférieure 20 et supérieure 21 étant assemblés de manière amovible grâce à des boutons pressions 54. Il est possible de remplacer ces boutons pressions 54 par des boucles/crochets de type Velcro^{®} ou par des fermetures Eclair^{®}. Cela permet avantageusement de pouvoir séparer en partie les deux couches de renfort inférieure 20 et supérieure 21 pour accéder aux couches de support 17, 18 et au grillage métallique 19, en sorte de réaliser d'éventuelles opérations de maintenance sur les premiers et seconds cordons 23, 33, sur les thermocouples 46, 47 ou sur les soudures au niveau des fils électriques de connexion 42. Sur cette figure 16 apparaît le bloc en silicone 13 dans lequel passent le câble d'alimentation électrique 11 et le câble de mesure de température 12.

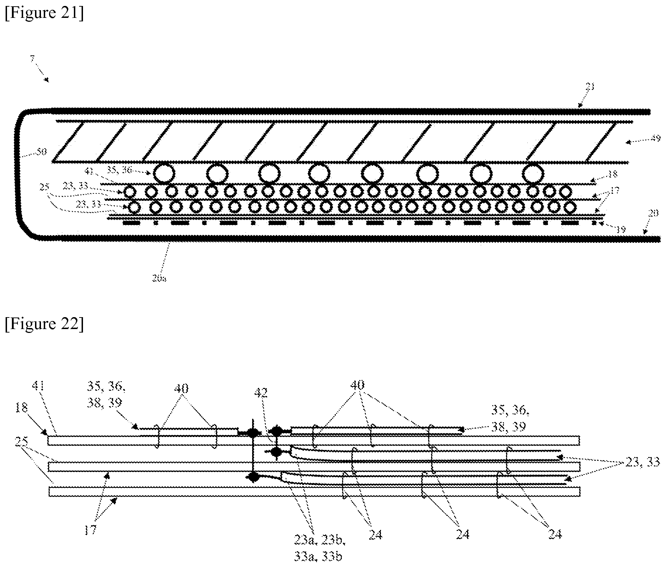

Des variantes de tapis chauffant 7 sont envisageables dans le cadre de l'invention telle que définie par les revendications quant à la réalisation de la surface de traitement thermique 22 et de la ou des ceintures de blocage thermique 27, 28. A titre d'exemple, en regard des figures 21 et 22, le tapis chauffant 7 présente des caractéristiques identiques à celles décrites précédemment à l'appui des figures 2 à 16 et 18 à 20, la différence portant sur le fait que ce tapis chauffant 7 comprend deux premières couches de support 17 qui sont superposées et qui reçoivent l'une et l'autre sur leurs faces supérieures 25 un ou plusieurs premiers cordons chauffants 23 fixés par couture 24, le ou les premiers cordons chauffants 23 sur ces deux premières couches de support 17 étant superposés et formant en combinaison la surface de traitement thermique 22. De même, ces deux premières couches de support 17 reçoivent l'une et l'autre sur leurs faces supérieures 25 un ou plusieurs seconds cordons chauffants 33 fixés par couture 24, le ou les seconds cordons chauffants 33 sur ces deux premières couches de support 17 étant superposés et formant en combinaison la ceinture de blocage thermique 27 externe et, éventuellement, la seconde ceinture de blocage thermique 28 interne. Comme illustré précédemment à l'appui de la figure 15, le premier réseau de fils 35, le second réseau de fils 36, les premiers fils de liaison électriques 38 et les seconds fils électriques de liaison 39 sont fixés par couture 40 sur la face supérieure 41 de la seconde couche de support 18 et sont raccordés par soudure avec l'une des extrémité 23a, 23b, 33a, 33b d'un premier cordon chauffant 23 ou d'un second cordon chauffant 33 par l'intermédiaire de fils électriques de connexion 42 qui passent au travers de la seconde couche de support 18 et sont soudés avec lesdits fils 35, 36, 38 ou 39 sur l'une ou l'autre des deux premières couches de support 17. Comme illustré sur la figure 22, lorsqu'un fil de connexion 42 raccorde un premier cordon chauffant 23 ou un second cordon chauffant 33 sur la première couche de support 17 inférieure avec un desdits fils 35, 36, 38, 39 sur la seconde couche de support 18, ledit fil de connexion 42 passe également au travers de la première couche de support 17 supérieure. La superposition des deux premières couches de support 17 permet notamment d'accroître la puissance thermique par unité de surface par rapport à la solution utilisant une seule première couche de support 17. A l'inverse, cela permet pour une même puissance thermique par unité de surface de limiter l'intensité du courant circulant dans les premiers et seconds cordons chauffants 23, 33 et par conséquent de réduire leur température maximale en régime transitoire, ce qui permet de ralentir le vieillissement de ceux-ci. On pourrait éventuellement envisager plus de deux premières couches de support 17 superposées sur le même principe.

D'autres variantes de tapis chauffant 7 peuvent également être envisagées dans le cadre de l'invention telle que définie dans les revendications. Par exemple, comme l'illustre la figure 17, on pourrait envisager de remplacer les deux couches de renfort 20, 21 des modes de réalisation décrits précédemment par une couche de recouvrement 55, de préférence en matériau silicone, dans laquelle sont noyés directement la ou les premières couches de support 17, la seconde couche de support 18 et le grillage métallique 19, le câble électrique d'alimentation 11 et le câble de mesure de température 12 sortant au niveau des bords 56 de ladite couche de recouvrement 55.

## Revendications

1. Dispositif multicouche chauffant souple, de type tapis chauffant souple (7), pour la réalisation de préformage ou de consolidation de préformes fibreuses de pièces composites (5), le dispositif comprenant au moins une première couche de support (17), au moins un premier cordon chauffant (23) agencé sur l'au moins une première couche de support et définissant une surface de traitement thermique (22) adaptée à la surface de la pièce composite à préformer ou à consolider, un premier réseau de fils (35) raccordé électriquement à l'au moins un premier cordon chauffant (23), **caractérisé en ce que** le dispositif comprend au moins un second cordon chauffant (33) agencé sur l'au moins une première couche de support (17) et définissant au moins une ceinture de blocage thermique (27, 28) à l'au moins une périphérie (30, 31) de la surface de traitement thermique (22) et un second réseau de fils (36) raccordé électriquement à l'au moins un second cordon chauffant (33).

2. Dispositif selon la revendication 1, dans lequel au moins deux premiers cordons chauffants (23) sont agencés de manière attenante les uns aux autres sur l'au moins une première couche de support (17) de sorte à définir la surface de traitement thermique (22) et au moins deux seconds cordons chauffants (33) sont agencés de manière attenante les uns aux autres sur l'au moins une première couche de support (17) de sorte à définir l'au moins une ceinture de blocage thermique (27, 28) autour de ladite surface de traitement thermique (22).

3. Dispositif selon la revendication 2, dans lequel pour chaque premier cordon chauffant (23) présent sur l'au moins une première couche de support (17), un ou deux seconds cordons chauffants (33) sont disposés en correspondance avec ledit premier cordon chauffant (23).

4. Dispositif selon l'une quelconque des revendications 2 ou 3, dans lequel les au moins deux premiers cordons chauffants (23) sont raccordés entre eux en série et/ou en parallèle grâce à des premiers fils électriques de liaison (38) et les au moins deux seconds cordons chauffants (33) sont raccordés entre eux en série et/ou en parallèle grâce à des seconds fils électriques de liaison (39).

5. Dispositif selon l'une quelconque des revendications 1 à 4, lequel comprend deux premières couches de support (17) superposées, au moins un premier cordon chauffant (23) et au moins un second cordon chauffant (33) étant agencés sur chaque première couche de support (17), les premiers cordons chauffants (23) des deux premières couches de support étant superposés et définissant en combinaison la surface de traitement et les seconds cordons chauffants (33) des deux premières couches de support étant superposés et définissant en combinaison l'au moins une ceinture de blocage thermique (27, 28).

6. Dispositif selon l'une quelconque des revendications 1 à 5, lequel comprend une seconde couche de support (18) agencée au-dessus de l'au moins une première couche de support (17), le premier réseau de fils (35) et le second réseau de fils (36) étant agencés sur la seconde couche de support.

7. Dispositif selon la revendication 6, dans lequel l'au moins un premier cordon chauffant (23) et l'au moins un second cordon chauffant (33) sont fixés sur une face supérieure (25) de l'au moins une première couche de support (17) grâce à des premiers moyens de fixation, de préférence par couture (24) et le premier réseau de fils (35) et le second réseau de fils (36) sont fixés sur une face supérieure de la seconde couche de support (18) grâce à des seconds moyens de fixation, de préférence par couture (40).

8. Dispositif selon l'une quelconque des revendications 6 ou 7, dans lequel le premier réseau de fils (35) comprend des premiers fils électriques de connexion (42) qui passent au moins au travers de la seconde couche de support (18) et sont raccordés grâce à des moyens de raccordement permanent à l'au moins un premier cordon chauffant (23) et, de même, le second réseau de fils (36) comprend des seconds fils électriques de connexion (42) qui passent au moins au travers de la seconde couche de support (18) et sont raccordés grâce à des moyens de raccordement permanent à l'au moins un second cordon chauffant (33).

9. Dispositif selon l'une quelconque des revendications 6 à 8, dans lequel l'au moins une première couche de support (17) et la seconde couche de support (18) sont conçues dans un matériau fibreux isolant électriquement et résistant à une température d'au moins 450°C, de préférence en fibres de verre ou de basalte.

10. Dispositif selon l'une quelconque des revendications 1 à 9, dans lequel l'au moins un premier cordon chauffant (23) et l'au moins un second cordon chauffant (33) comprennent chacun une âme (44) électriquement isolante en fibres sèches, sur laquelle est enroulé un fil résistif (43).

11. Dispositif selon l'une quelconque des revendications 1 à 10, lequel comprend deux couches de renfort (20, 21) entre lesquelles sont prises en sandwich, notamment, l'au moins une première couche de support (17) mettant en oeuvre la surface de traitement thermique (22) et l'au moins une ceinture de blocage thermique (27, 28), le premier réseau de fils (35) et le second réseau de fils (36), un système d'assemblage étant mis en oeuvre entre les deux couches de renfort (20, 21) de sorte à former une enveloppe dont un des bords (52) laisse sortir le premier réseau de fils et le second réseau de fils.

12. Dispositif selon la revendication 11, dans lequel le système d'assemblage est agencé pour permettre une fixation amovible entre les deux couches de renfort (20, 21).

13. Dispositif selon l'une des revendications 11 ou 12, dans lequel les deux couches de renfort (20, 21) sont constituées dans un matériau fibreux isolant électriquement et résistant à une température d'au moins 450°C, de préférence en fibres de verre ou de basalte.

14. Dispositif selon la revendication 13, lequel comprend un grillage métallique (19) agencé entre la couche de renfort inférieure (20) et l'au moins une première couche de support (17), ledit grillage métallique étant raccordé à un fil électrique destiné à être mis à la terre.

15. Dispositif selon l'une quelconque des revendications 11 à 14, lequel comprend une couche isolante thermiquement (49) agencée au-dessus de l'au moins une première couche de support (17) mettant en oeuvre la surface de traitement thermique (22) et l'au moins une ceinture de blocage thermique (27, 28).

16. Dispositif selon la revendication 15, dans lequel la couche isolante thermiquement (49) est positionnée juste en-dessous de la face inférieure de la couche de renfort supérieure (21) ou, inversement, juste au-dessus de la face supérieure de la couche de renfort supérieure (21).

17. Dispositif selon l'une quelconque des revendications 1 à 10, lequel comprend une couche de recouvrement (55), de préférence en matériau silicone, dans laquelle sont noyés l'au moins une première couche de support (17) mettant en oeuvre la surface de traitement thermique (22) et l'au moins une ceinture de blocage thermique (27, 28), le premier réseau de fils (35) et le second réseau de fils (36), ladite couche de recouvrement laissant sortir au niveau d'un de ses bords (56) le premier réseau de fils et le second réseau de fils.

18. Dispositif selon l'une quelconque des revendications 1 à 17, lequel comprend au moins deux capteurs de mesure de la température (46, 47) agencés sur l'au moins une première couche de support (17) au niveau de l'au moins un premier cordon chauffant (23) et de l'au moins un second cordon chauffant (33).

19. Dispositif selon l'une quelconque des revendications 1 à 18, lequel comprend un bloc (13) malléable d'étanchéité, de préférence en silicone, au travers duquel passent un câble d'alimentation électrique (11) incorporant le premier réseau de fils (35) et le second réseau de fils (36) et un câble de mesure de température (12).

20. Installation (1) pour la réalisation de préformage ou de consolidation de préformes fibreuses de pièces composites, laquelle comprend un moule (2) muni d'une face supérieure (3) qui comporte un pourtour (6) et une matrice (4) constituant le négatif de la pièce composite (5) à réaliser, un dispositif multicouche chauffant souple présentant les caractéristiques de l'une quelconque des revendications 1 à 19, la surface de traitement thermique (22) et l'au moins une ceinture de blocage thermique (27, 28) étant adaptées à la pièce composite (5) à réaliser, une membrane (8) de mise sous vide comprenant un bord périphérique (10) apte venir en contact étanche sur le pourtour (6) de la face supérieure du moule et une valve antiretour (14), un dispositif d'aspiration d'air (16) comprenant un conduit (15) apte à être raccordé à ladite valve antiretour (14) et, une armoire de régulation (57) sur laquelle sont raccordés le premier réseau de fils (35) et le second réseau de fils (36), ladite armoire étant configurée pour réguler la température du au moins un premier cordon chauffant (23) et du au moins un second cordon chauffant (33) sur l'au moins une première couche de support (17).

## Patentansprüche

1. Flexible Mehrschicht-Heizvorrichtung, in der Art einer flexiblen Heizmatte (7) zum Vorformen oder Verfestigen von Faser-Vorformen von Verbundteilen (5), wobei die Vorrichtung mindestens eine erste Trägerschicht (17), mindestens ein erstes Heizkabel (23), das auf der mindestens einen ersten Trägerschicht angeordnet ist, und eine Wärmebehandlungsoberfläche (22) definiert, die an der Oberfläche des vorzuformenden oder zu verfestigenden Verbundteils angepasst ist, ein erstes Netzwerk von Drähten (35), das elektrisch an das mindestens eine erste Heizkabel (23) angeschlossen ist, umfasst, **dadurch gekennzeichnet, dass** die Vorrichtung mindestens ein zweites Heizkabel (33) umfasst, das auf der mindestens einen ersten Trägerschicht (17) angeordnet ist, und mindestens einen Wärmesperrgürtel (27, 28) für die mindestens eine Peripherie (30, 31) der Wärmebehandlungsoberfläche (22) definiert, und ein zweites Netzwerk von Drähten (36), das elektrisch an das mindestens eine zweite Heizkabel (33) angeschlossen ist.

2. Vorrichtung nach Anspruch 1, wobei mindestens zwei erste Heizkabel (23) aneinander angrenzend auf der mindestens einen ersten Trägerschicht (17) angeordnet sind, um die Wärmebehandlungsoberfläche (22) zu definieren, und mindestens zwei zweite Heizkabel (33) aneinander angrenzend auf der mindestens einen ersten Trägerschicht (17) angeordnet sind, um den mindestens einen Wärmesperrgürtel (27, 28) um die Wärmebehandlungsoberfläche (22) herum zu definieren.

3. Vorrichtung nach Anspruch 2, wobei für jedes erste auf der mindestens einen ersten Trägerschicht (17) vorhandene erste Heizkabel (23) ein oder zwei zweite Heizkabel (33) in Übereinstimmung mit dem ersten Heizkabel (23) angeordnet sind.

4. Vorrichtung nach einem der Ansprüche 2 oder 3, wobei die mindestens zwei ersten Heizkabel (23) dank erster elektrischer Verbindungsdrähte (38) aneinander in Reihe und/oder parallel angeschlossen sind, und die mindestens zwei zweiten Heizkabel (33) dank zweiter elektrischer Verbindungsdrähte (39) aneinander in Reihe und/oder parallel angeschlossen sind.

5. Vorrichtung nach einem der Ansprüche 1 bis 4, welche zwei erste überlagerte Trägerschichten (17), mindestens ein erstes Heizkabel (23) und mindestens ein zweites Heizkabel (33) umfasst, die auf jeder ersten Trägerschicht (17) angeordnet sind, wobei die ersten Heizkabel (23) der beiden ersten Trägerschichten überlagert sind, und in Kombination die Wärmebehandlungsoberfläche definieren, und die zweiten Heizkabel (33) der beiden ersten Trägerschichten überlagert sind, und in Kombination den mindestens einen Wärmesperrgürtel (27, 28) definieren.

6. Vorrichtung nach einem der Ansprüche 1 bis 5, welche eine zweite Trägerschicht (18) umfasst, die oberhalb der mindestens einen ersten Trägerschicht (17) angeordnet ist, wobei das erste Netzwerk von Drähten (35) und das zweite Netzwerk von Drähten (36) auf der zweiten Trägerschicht angeordnet sind.

7. Vorrichtung nach Anspruch 6, wobei das mindestens eine erste Heizkabel (23) und das mindestens eine zweite Heizkabel (33) dank erster Befestigungsmittel, vorzugsweise durch Nähen (24) auf einer Oberseite (25) der mindestens einen ersten Trägerschicht (17) befestigt sind, und das erste Netzwerk von Drähten (35) und das zweite Netzwerk von Drähten (36) dank zweiter Befestigungsmittel, vorzugsweise durch Nähen (40) auf einer Oberseite der zweiten Trägerschicht (18) befestigt sind.

8. Vorrichtung nach einem der Ansprüche 6 oder 7, wobei das erste Netzwerk von Drähten (35) erste elektrische Verbindungsdrähte (42) umfasst, die mindestens durch die zweite Trägerschicht (18) verlaufen und dank permanenter Anschlussmittel an das mindestens eine erste Heizkabel (23) angeschlossen sind, und das zweite Netzwerk von Drähten (36) ebenso elektrische Verbindungsdrähte (42) umfasst, die mindestens durch die zweite Trägerschicht (18) verlaufen und dank permanenter Anschlussmittel an das mindestens eine zweite Heizkabel (33) angeschlossen sind.

9. Vorrichtung nach einem der Ansprüche 6 bis 8, wobei die mindestens eine erste Trägerschicht (17) und die zweite Trägerschicht (18) aus einem elektrisch isolierenden, und einer Temperatur von mindestens 450°C standhaltenden Faserwerkstoff, vorzugsweise aus Glasfaser oder Basalt konzipiert sind.

10. Vorrichtung nach einem der Ansprüche 1 bis 9, wobei das mindestens eine erste Heizkabel (23) und das mindestens eine zweite Heizkabel (33) jeweils einen elektrisch isolierenden Kern (44) aus Trockenfasern umfassen, auf dem ein Widerstandsdraht (43) aufgewickelt ist.

11. Vorrichtung nach einem der Ansprüche 1 bis 10, welche zwei Verstärkungsschichten (20, 21) umfasst, zwischen denen insbesondere die mindestens eine erste Trägerschicht (17), welche die Wärmebehandlungsoberfläche (22) und den mindestens einen Wärmesperrgürtel (27, 28) umsetzt, das erste Netzwerk von Drähten (35) und das zweite Netzwerk von Drähten (36) sandwichartig aufgenommen sind, wobei ein System zum Zusammenfügen zwischen den Verstärkungsschichten (20, 21) umgesetzt wird, um eine Hülle zu bilden, deren Ränder (52) das erste Netzwerk von Drähten und das zweite Netzwerk von Drähten austreten lässt.

12. Vorrichtung nach Anspruch 11, wobei das System zum Zusammenfügen angeordnet ist, um eine abnehmbare Befestigung zwischen den Verstärkungsschichten (20, 21) zu ermöglichen.

13. Vorrichtung nach Anspruch 11 oder 12, wobei die beiden Verstärkungsschichten (20, 21) aus einem elektrisch isolierenden, und einer Temperatur von mindestens 450°C standhaltenden Faserwerkstoff, vorzugsweise aus Glasfaser oder Basalt bestehen.

14. Vorrichtung nach Anspruch 13, welche ein metallisches Drahtgeflecht (19) umfasst, das zwischen der unteren Verstärkungsschicht (20) und der mindestens einen ersten Trägerschicht (17) angeordnet ist, wobei das metallische Drahtgeflecht an einen elektrischen Draht angeschlossen ist, der dazu bestimmt ist, geerdet zu werden.

15. Vorrichtung nach einem der Ansprüche 11 bis 14, welche eine Wärmedämmschicht (49) umfasst, die oberhalb der mindestens einen ersten Trägerschicht (17) angeordnet ist, die die Wärmebehandlungsoberfläche (22) und den mindestens einen Wärmesperrgürtel (27, 28) umsetzt.

16. Vorrichtung nach Anspruch 15, wobei die Wärmedämmschicht (49) unmittelbar unterhalb der Unterseite der oberen Verstärkungsschicht (21), oder umgekehrt, unmittelbar oberhalb der Oberseite der oberen Verstärkungsschicht (21) positioniert ist.

17. Vorrichtung nach einem der Ansprüche 1 bis 10, welche eine Abdeckschicht (55), vorzugsweise aus Silikonwerkstoff umfasst, in der mindestens eine erste Trägerschicht (17), welche die Wärmebehandlungsoberfläche (22) und den mindestens einen Wärmesperrgürtel (27, 28) umsetzt, das erste Netzwerk von Drähten (35) und das zweite Netzwerk von Drähten (36) versenkt sind, wobei die Abdeckschicht im Bereich eines ihrer Ränder (56) das erste Netzwerk von Drähten und das zweite Netzwerk von Drähten austreten lässt.

18. Vorrichtung nach einem der Ansprüche 1 bis 17, welche mindestens zwei Messsensoren für die Temperatur (46, 47) umfasst, die auf der mindestens einen ersten Trägerschicht (17) im Bereich des mindestens einen ersten Heizkabels (23) und des mindestens einen zweiten Heizkabels (33) angeordnet sind.

19. Vorrichtung nach einem der Ansprüche 1 bis 18, welche einen anpassungsfähigen Dichtblock (13), vorzugsweise aus Silikon umfasst, durch den ein elektrisches Versorgungskabel (11), welches das erste Netzwerk von Drähten (35) und das zweite Netzwerk von Drähten (36) einbezieht, und ein Temperaturmesskabel (12) verlaufen.

20. Installation (1) zum Vorformen oder Verfestigen von Faser-Vorformen von Verbundteilen, welche eine Form (2), die mit einer Oberseite (3) versehen ist, die einen Umfang (6) und eine Matrize (4) beinhaltet, welche das Negativ des herzustellenden Verbundteils (5) darstellt, eine flexible Mehrschicht-Heizvorrichtung, welche die Eigenschaften nach einem der Ansprüche 1 bis 19 aufweist, wobei die Wärmebehandlungsoberfläche (22) und der mindestens eine Wärmesperrgürtel (27, 28) an das herzustellende Verbundteil (5) angepasst sind, eine Membran (8) zum Versetzen unter Vakuum, die einen peripheren Rand (10), der imstande ist, am Umfang (6) der Oberseite der Form in dichten Kontakt zu treten, und ein Rückschlagventil (14) umfasst, eine Luftsaugvorrichtung (16), die eine Leitung (15) umfasst, die imstande ist an das Rückschlagventil (14) angeschlossen zu werden, und einen Regelungsschrank (57) umfasst, an den das erste Netzwerk von Drähten (35) und das zweite Netzwerk von Drähten (36) angeschlossen sind, wobei der Schrank konfiguriert ist, um die Temperatur des mindestens einen ersten Heizkabels (23) und des mindestens einen zweiten Heizkabels (33) auf der mindestens einen ersten Trägerschicht (17) zu regeln.

## Claims

1. A flexible multilayer heating device, of the flexible heating mat (7) type, for carrying out the preforming or consolidation of fibrous preforms of composite parts (5), the device comprising at least one first support layer (17), at least one first heating cord (23) arranged on the at least one first support layer and defining a heat-treatment surface (22) adapted to the surface of the composite part to be preformed or consolidated, a first network of wires (35) electrically connected to the at least one first heating cord (23), **characterised in that** the device comprises at least one second heating cord (33) arranged on the at least one first support layer (17) and defining at least one heat-blocking belt (27, 28) at the at least one periphery (30, 31) of the heat-treatment surface (22) and a second network of wires (36) electrically connected to the at least one second heating cord (33).

2. The device according to claim 1, wherein at least two first heating cords (23) are arranged adjacent to one another on the at least one first support layer (17) so as to define the heat-treatment surface (22) and at least two second heating cords (33) are arranged adjacent to one another on the at least one first support layer (17) so as to define the at least one heat-blocking belt (27, 28) around said heat-treatment surface (22).

3. The device according to claim 2, wherein, for each first heating cord (23) present on the at least one first support layer (17), one or two second heating cord(s) (33) are arranged so as to match with said first heating cord (23).

4. The device according to any one of claims 2 or 3, wherein the at least two first heating cords (23) are connected together in series and/or in parallel thanks to first electrical connection wires (38) and the at least two second heating cords (33) are connected together in series and/or in parallel thanks to second electrical connection wires (39).

5. The device according to any one of claims 1 to 4, which comprises two first superposed support layers (17), at least one first heating cord (23) and at least one second heating cord (33) being arranged on each first support layer (17), the first heating cords (23) of the two first support layers being superposed and defining, in combination, the treatment surface and the second heating cords (33) of the two first support layers being superposed and defining, in combination, the at least one heat-blocking belt (27, 28).

6. The device according to any one of claims 1 to 5, which comprises a second support layer (18) arranged over the at least one first support layer (17), the first network of wires (35) and the second network of wires (36) being arranged on the second support layer.

7. The device according to claim 6, wherein the at least one first heating cord (23) and the at least one second heating cord (33) are fastened on an upper face (25) of the at least one first support layer (17) thanks to first fastening means, preferably by stitching (24) and the first network of wires (35) and the second network of wires (36) are fastened on an upper face of the second support layer (18) thanks to second fastening means, preferably by stitching (40).

8. The device according to any one of claims 6 or 7, wherein the first network of wires (35) comprises first electrical connection wires (42) which pass at least throughout the second support layer (18) and are connected thanks to permanent connection means to the at least one first heating cord (23) and, similarly, the second network of wires (36) comprises second electrical connection wires (42) which pass at least throughout the second support layer (18) and are connected thanks to permanent connection means to the at least one second heating cord (33).

9. The device according to any one of claims 6 to 8, wherein the at least one first support layer (17) and the second support layer (18) are designed in an electrically-insulating fibrous material withstanding a temperature of at least 450°C, preferably made of glass or basalt fibres.

10. The device according to any one of claims 1 to 9, wherein each of the at least one first heating cord (23) and the at least one second heating cord (33) comprises an electrically-insulating core (44) made of dry fibres, on which a resistive wire (43) is wound.

11. The device according to any one of claims 1 to 10, which comprises two reinforcement layers (20, 21) between which the at least one first support layer (17) implementing the heat-treatment surface (22) and the at least one heat-blocking belt (27, 28), the first network of wires (35) and the second network of wires (36) are sandwiched, in particular, an assembly system being implemented between the two reinforcement layers (20, 21) so as to form an envelope one of the edges (52) of which lets the first network of wires and the second network of wires come out.

12. The device according to claim 11, wherein the assembly system is arranged so as to enable a removable fastening between the two reinforcement layers (20, 21).

13. The device according to one of claims 11 or 12, wherein the two reinforcement layers (20, 21) are made of an electrically-insulating fibrous material withstanding a temperature of at least 450°C, preferably made of glass or basalt fibres.

14. The device according to claim 13, which comprises a metal mesh (19) arranged between the lower reinforcement layer (20) and the at least one first support layer (17), said metal mesh being connected to an electrical wire intended to be grounded.

15. The device according to any one of claims 11 to 14, which comprises a heat-insulating layer (49) arranged over the at least one first support layer (17) implementing the heat-treatment surface (22) and the at least one heat-blocking belt (27, 28).

16. The device according to claim 15, wherein the heat-insulating layer (49) is positioned just beneath the lower face of the upper reinforcement layer (21) or, conversely, just over the upper face of the upper reinforcement layer (21).

17. The device according to any one of claims 1 to 10, which comprises a cover layer (55), preferably made of a silicone material, into which the at least one first support layer (17) implementing the heat-treatment surface (22) and the at least one heat-blocking belt (27, 28), the first network of wires (35) and the second network of wires (36) are embedded, said cover layer letting the first network of wires and the second network of wires come out at one of its edges (56).

18. The device according to any one of claims 1 to 17, which comprises at least two sensors (46, 47) for measuring temperature arranged on the at least one first support layer (17) at the at least one first heating cord (23) and the at least one second heating cord (33).

19. The device according to any one of claims 1 to 18, which comprises a malleable sealing block (13), preferably made of silicone, throughout which an electric power supply cable (11) incorporating the first network of wires (35) and the second network of wires (36) and a temperature measurement cable (12) pass.

20. An installation (1) for carrying out preforming or consolidation of fibrous preforms of composite parts, which comprises a mould (2) provided with an upper face (3) which includes a periphery (6) and a die (4) forming the negative of the composite part (5) to be made, a flexible multilayer heating device having the features of any one of claims 1 to 19, the heat-treatment surface (22) and the at least one heat-blocking belt (27, 28) being adapted to the composite part (5) to be made, a vacuum production membrane (8) comprising a peripheral edge (10) able to come into sealed contact over the periphery (6) of the upper face of the mould and a check valve (14), an air-suction device (16) comprising a pipe (15) able to be connected to said check valve (14) and, a regulation unit (57) on which the first network of wires (35) and the second network of wires (36) are connected, said regulation unit being configured to regulate the temperature of the at least one first heating cord (23) and of the at least one second heating cord (33) over the at least one first support layer (17).
